# EUROPEAN PATENT APPLICATION

(11) **EP 4 674 547 A1**
(43) Date of publication of application: **07.01.2026**
(21) Application number: 25186332.0
(22) Date of filing: 30.06.2025
(51) Int. Cl.: B23B 27/04, B23B 27/06

(54) **CUTTING TOOL**

(30) Priority: 01.07.2024 JP 2024106175
(71) Applicant: Tungaloy Corporation, Iwaki-shi, Fukushima 970-1144 (JP)
(72) Inventor: SASAKI, Yasutake, Iwaki-shi, Fukushima, 9701144 (JP)
(74) Representative: Vossius & Partner Patentanwälte Rechtsanwälte mbB

(57) **Abstract**

For a cutting insert to be used particularly for copy machining or finish machining, a cutting tool is provided that can avoid interference with a machined surface, while suppressing deterioration of a rigidity and a bonding strength, occurrence of breakage and chattering, or the like. A cutting tool includes a base insert member extending along a longitudinal direction and a cutting edge member provided at a longitudinal end portion of the base insert member. The cutting edge member includes a rake surface, a flank surface, an arcuate cutting edge, a breaker wall, and a boss portion including a boss surface. A center angle of the cutting edge is not less than 180°, and each of edge portions present behind the cutting edge along the longitudinal direction has at least a portion that is chamfered.

## Description

### Background

### Field

The present invention relates to a cutting tool.

### Description of Related Art

As a cutting tool when copy machining or finish machining is to be performed, a cutting insert having an arcuate cutting edge formed of a cemented carbide may be used (see, e.g., Japanese Patent No. 5592954, Japanese Patent No. 5262528, and U.S. Patent Specification No. 9579727). For machining of a high-hardness material, a cutting insert having a cutting edge formed of a sintered body containing cBN (cubic boron nitride) having a hardness higher than that of the cemented carbide may be used. A cutting condition when such a cutting insert is used for, e.g., the finish machining, is about 0.2 mm, which is generally extremely low compared to that for the cemented carbide insert.

In the copy machining using a cutting insert having a cutting edge as described above, it is important that an area of a joint portion of the cutting edge is large for the sake of ensuring a bonding strength and an insert rigidity and suppressing breakage of the insert and chattering. In this regard, merely replacing a cutting edge portion of an insert having a center angle larger than 180° as disclosed in Japanese Patent No. 5592954, Japanese Patent No. 5262528, and U.S. Patent Specification No. 9579727 with a sintered body containing cBN does not make it easy to ensure a joint area of a brazed portion, and, from such a viewpoint, it can be said that the center angle of the cutting edge is preferably about 180°.

### Summary

However, when the center angle of the cutting edge is simply set to about 180° as described above, another problem may become apparent as follows. In other words, in such a cutting insert, when a flank surface is positive, a clearance between an edge portion present at a position higher than that of a cutting edge and a machined surface is narrow and, during machining, the edge portion may interfere with the machined surface. In addition, there is a concern that, when the edge portion remains in an edge shape, chip bite may cause sudden fracture. In this regard, as one of measures to be taken, it is conceivable perform machining such that a height of the edge portion is the same as a height of a rake surface in the same manner as in a breaker machining unit, but this may result in the need to machine a brazed portion between a base insert and the cutting edge portion, This leads to an insufficient bonding strength due to a reduced joint area. To avoid the interference by the edge portion, it is also possible to take another measure of increasing a back taper but, in such a case, a width of the insert is inevitably reduced around the brazed portion, resulting in an insufficient bonding strength due to the reduced joint area, while the rigidity of the insert decreases to cause concerns about the breakage of the insert and the chattering, as described above.

It is therefore an object of the present invention to provide, for a cutting insert to be used particularly for copy machining or finish machining, a cutting tool that can avoid interference with a machined surface, while suppressing deterioration of a rigidity and a bonding strength, occurrence of breakage and chattering, or the like.

An aspect of the present invention is a cutting tool including: a base insert member extending along a longitudinal direction; and a cutting edge member provided at a longitudinal end portion of the base insert member, the cutting edge member including: a rake surface; a flank surface; a cutting edge configured at a line of intersection between the rake surface and the flank surface and having an arcuate shape in top view when viewed from a side with the rake surface; a breaker wall formed inwardly of the cutting edge and protruding upward from the cutting tool; and a boss portion including a boss surface formed continuously to the breaker wall, a center angle of the cutting edge being not less than 180°, and an edge portion present behind the cutting edge along the longitudinal direction, the edge portion having at least a portion that is chamfered.

With the cutting tool according to an aspect as described above, by merely forming the edge portion present behind the cutting edge into a chamfered shape, it is possible to avoid interference with a machined surface without causing such problems as an insufficient bonding strength due to a reduced joint area and a reduced rigidity of an insert as well as occurrence of breakage and chattering.

In a cutting tool as described above, the edge portion may be chamfered.

In a cutting tool as described above, a region that has been subjected to the chamfering may include a virtual edge corresponding to a line of intersection between the boss surface and the flank surface.

In a cutting tool as described above, each of the base insert member and the cutting edge member may have the edge portion.

In a cutting tool as described above, the center angle of the cutting edge may be not more than 185°.

In a cutting tool as described above, between the cutting edge and the edge portion, a back taper having a width gradually decreasing toward the edge portion may be provided.

In a cutting tool as described above, a joint portion between the base insert member and the cutting edge member may have a stepped shape in side view.

In a cutting tool as described above, a joint portion between the base insert member and the cutting edge member may have a wavy shape in top view.

A cutting tool as described above may be a cutting insert including the base insert member formed of a cemented carbide and the cutting edge member formed of a sintered body containing cBN.

### Brief Description of Drawings

FIG. 1 is a perspective view illustrating an example of a cutting tool in an aspect of the present invention;
FIG. 2 is a front view of the cutting tool;
FIG. 3 is a top view of the cutting tool;
FIG. 4 is a right side view of the cutting tool;
FIG. 5 is a perspective view illustrating a cutting edge member of the cutting tool in enlarged relation;
FIG. 6 is a top view illustrating a portion of the cutting edge member of the cutting tool in enlarged relation;
FIG. 7 is a perspective view illustrating the cutting edge member of the cutting tool in enlarged view, which is viewed from the side;
FIG. 8 is a schematic view illustrating a flow of a coolant over the cutting edge member;
FIG. 9 is a diagram illustrating a cross-sectional shape of the cutting edge member;
FIG. 10 is an enlarged perspective view of the cutting edge member, which illustrates another example form of the cutting tool;
FIG. 11 is an enlarged perspective view of the cutting edge member, which illustrates still another example form of the cutting tool;
FIG. 12 is a schematic perspective view illustrating a flow of a coolant over a cutting edge member in which no recessed portion is formed in a boss portion for reference;
FIG. 13 is a schematic side view illustrating the flow of the coolant over the cutting edge member in which no recessed portion is formed in the boss portion for reference;
FIG. 14 is a top view of a cutting edge member, which illustrates a center angle α, a back taper, or the like of a cutting edge; and
FIG. 15A and FIG. 15B are diagrams illustrating, respectively, a partially chamfered edge portion and an unchamfered edge portion for comparison.

### Detailed Description

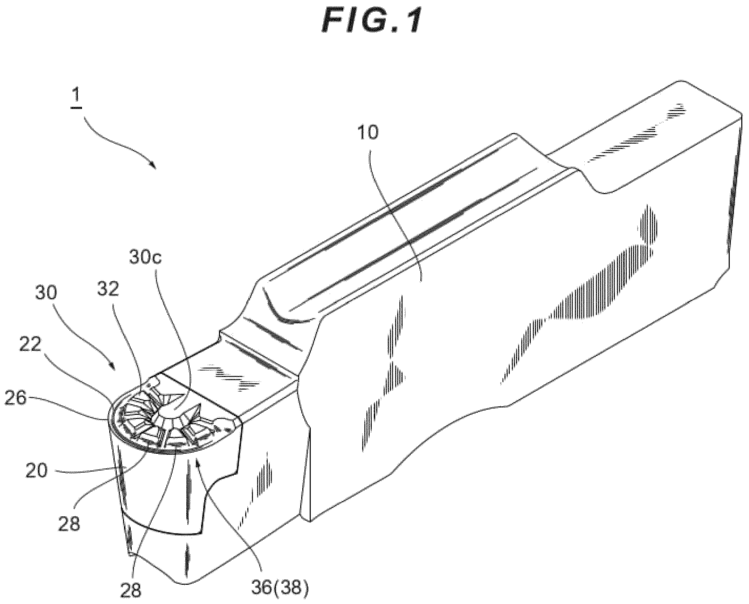

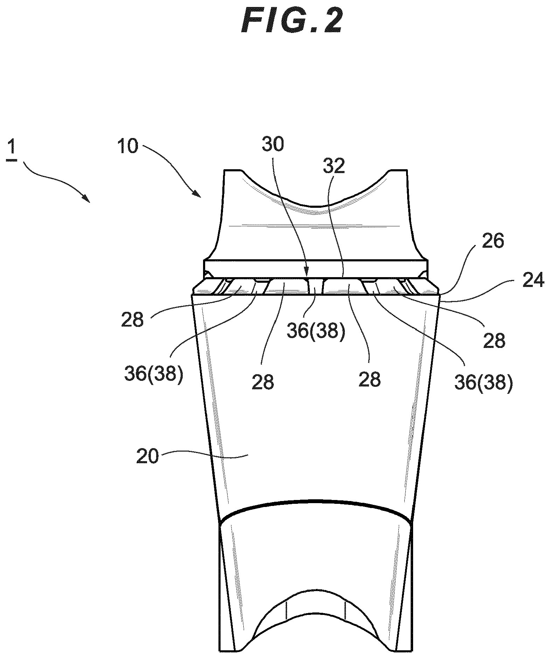

Referring to the drawings, a detailed description will be given below of a preferred embodiment of a cutting tool according to the present invention (see FIG. 1 to FIG. 9 or the like). Hereinbelow, as the preferred embodiment, a cutting insert 1 including a base insert member 10 and a cutting edge member 20 will be described with examples. Note that, hereinbelow, a description will be given on the assumption that a longitudinal direction (direction along a center axis 10X) of the base insert member 10 is a "front-rear direction", a left-right direction in FIG. 2 is a "width direction", an upper side (side with a boss portion 30 described later) in FIG. 2 is an "upper side", and a lower side in FIG. 2 is a "lower side".

### Structure of Cutting Insert

The base insert member 10 is a member that holds the brazed cutting edge member 20 (see FIG. 1 to FIG. 4). The base insert member 10 in the present embodiment is formed of a cemented carbide material in a shape extending along the center axis 10X.

The cutting edge member 20 is a member formed of a sintered body containing cBN (cubic boron nitride) having a hardness higher than that of a cemented carbide, which is brazed to an end portion of the base insert member 10 to be included in the cutting insert 1. The cutting edge member 20 in the present embodiment has a rake surface 22, a flank surface 24, a cutting edge 26, a breaker wall 28, a boss portion 30, a boss surface 32, a depressed portion 34, recessed portions 36, grooves 38, and the like (see FIG. 1 or the like).

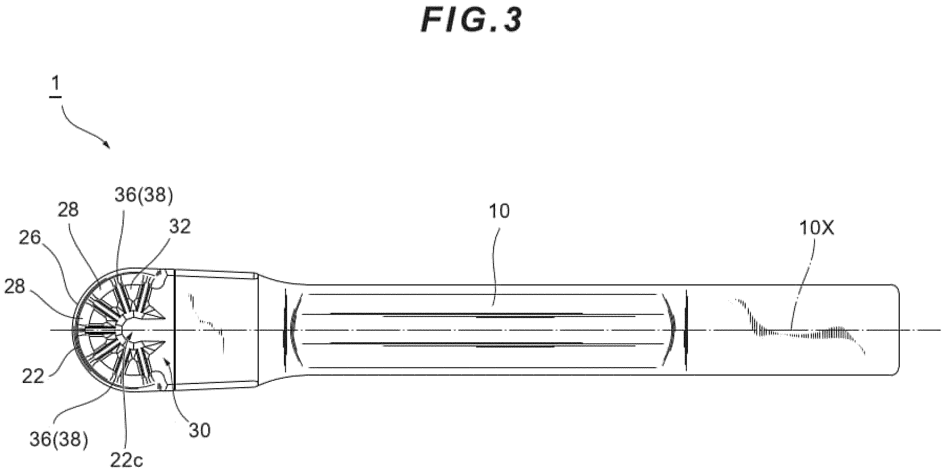

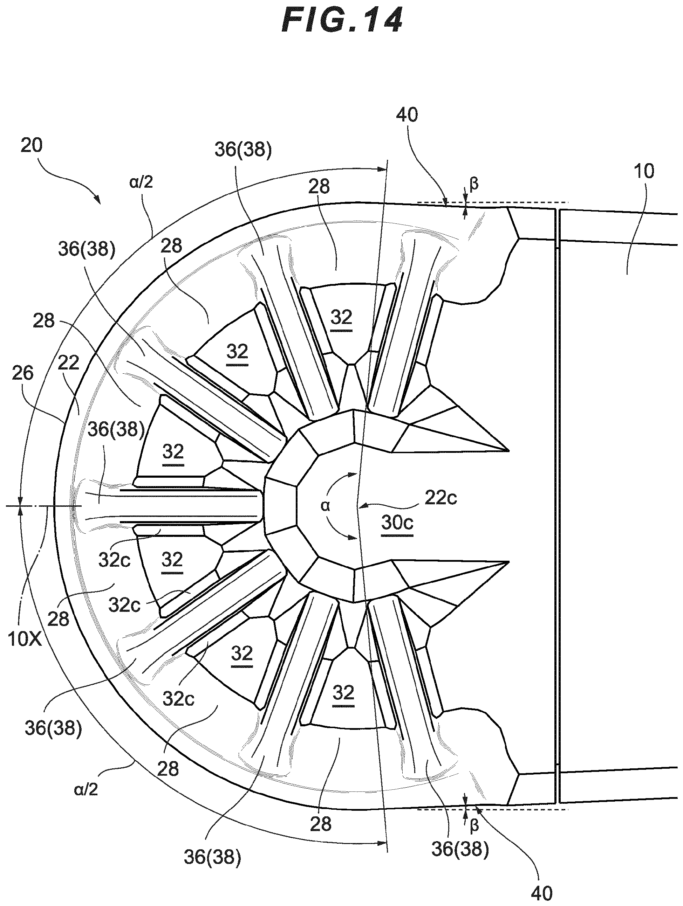

The cutting edge 26 is formed at a line of intersection between the rake surface 22 and the flank surface 24. The cutting edge 26 in the cutting edge member 20 in the present embodiment is formed to have a substantially semicircular arcuate shape in top view when viewed from a side with the rake surface 22 of the cutting edge member 20 (see FIG. 3 or the like). A center angle α of the substantially arcuate cutting edge 26 is slightly more than 180°, e.g., about 185°. When the center angle α is 185°, each of left and right angles around the center axis 10X is α/2, i.e., 92.5° (see FIG. 14). A narrowing portion at the rear of the cutting edge 26, which is closer to the base insert member 10 and provides a clearance, is a portion decreasing in width from a maximum width of the cutting edge 26 and referred to as a back taper or the like (denoted by a reference sign 40 in FIG. 14). A clearance angle (angle to a line parallel to the center axis 10X) β of the back taper 40 is, e.g., 2.5° (see FIG. 14). Note that, in front view in which the cutting insert 1 is viewed from a leading end side of the base insert member 10 along the center axis 10X, the back taper 40 is hidden and invisible (see FIG. 2, FIG. 3, or the like). Note that, in FIG. 3 or the like, a substantially center portion of the cutting edge 26 having the substantially arcuate shape as described above is denoted by a reference sign 22c. The cutting edge 26 may also be subjected to honing processing to have a chamfered shape, though not particularly illustrated in detail.

The rake surface 22 is formed on an upper surface side of the cutting edge member 20 along the substantially arcuate cutting edge 26. The flank surface 24 is formed, at a side surface of the cutting edge member 20, as a positive surface inclined along the substantially arcuate cutting edge 26 so as to approach a lower surface with distance from the cutting edge 26.

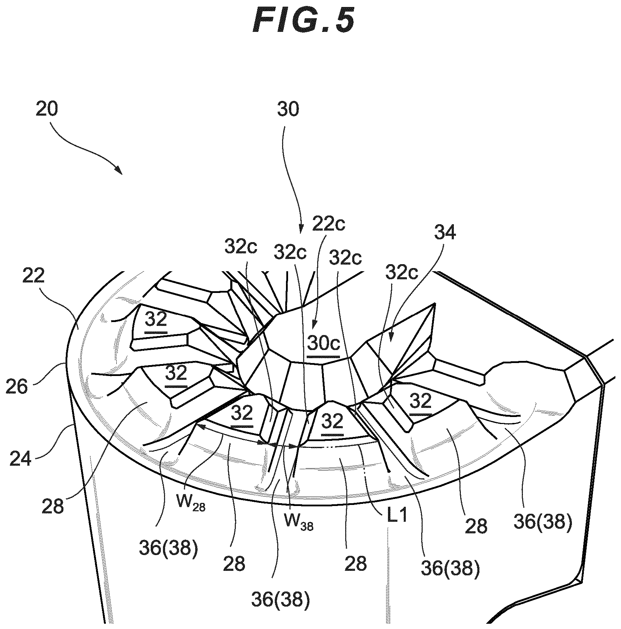

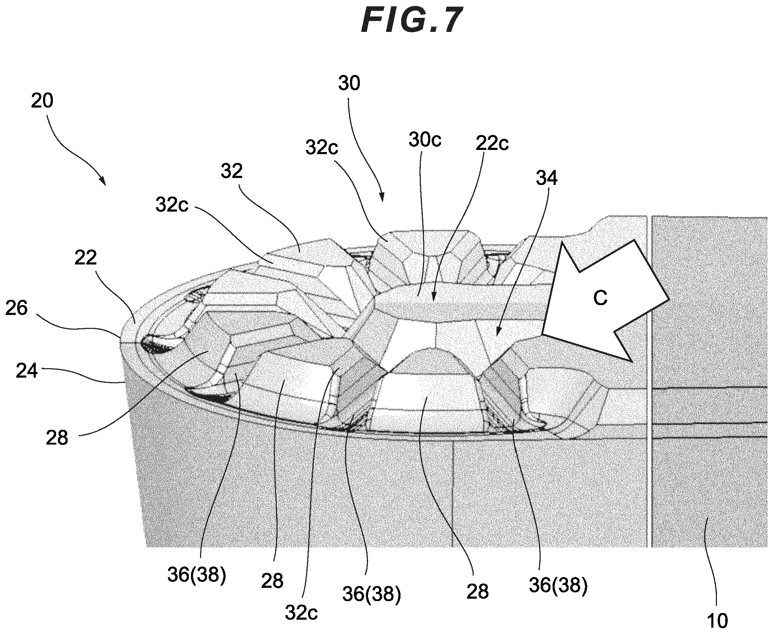

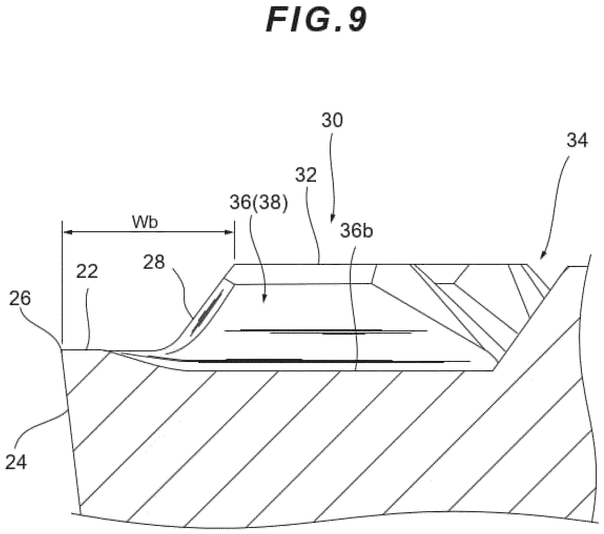

The breaker wall 28 is formed inwardly of the cutting edge 26 so as to protrude upward from the cutting edge member 20. The breaker wall 28 in the cutting edge member 20 in the present embodiment has a substantially arcuate shape as a whole, and is divided by the plurality of recessed portions 36 described later into a plurality of sections (see FIG. 1, FIG. 5, or the like). In the cutting edge member 20 in the present embodiment, a distance (referred to as a breaker width, which is denoted by a reference sign Wb in FIG. 9) between the breaker wall 28 and the cutting edge 26 is uniform, and a surface of the breaker wall 28 has a shape similar to that of a circumferential surface of a circular truncated cone (see FIG. 7 or the like).

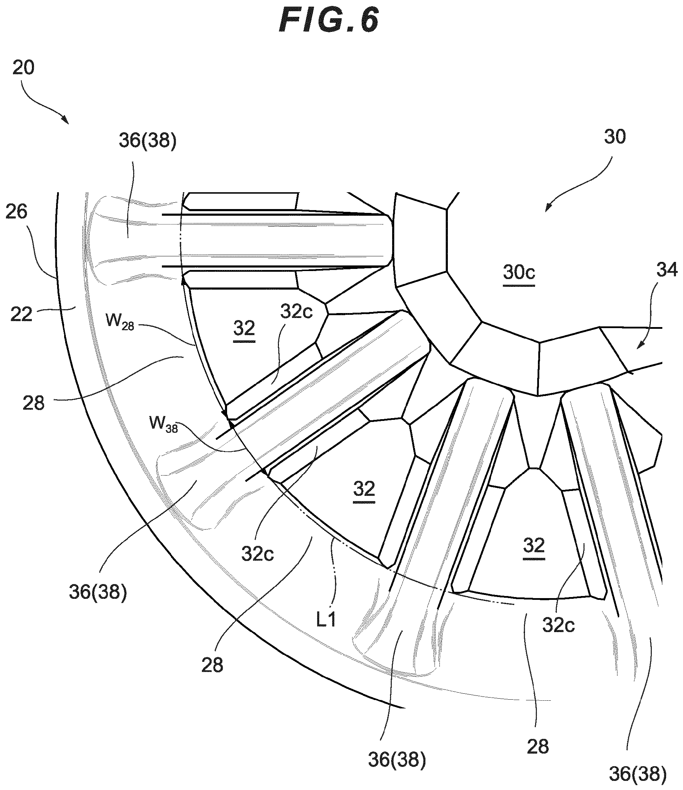

The boss portion 30 is made of a top portion of the breaker wall 28 formed to protrude upward. On an upper side of the boss portion 30, the boss surface 32 is formed (see FIG. 5, FIG. 6, or the like). The boss surface 32 may also be chamfered (chamfered portion is denoted by a reference sign 32c in FIG. 5). The boss portion 30 in the cutting edge member 20 in the present embodiment has a shape similar to that of a semi-circular truncated cone having a small thickness (height) as a whole. In addition, the boss surface 32 corresponding to an upper surface of the boss portion 30 is divided by the plurality of recessed portions 36 described later into a plurality of sections (see FIG. 1, FIG. 5, or the like). Meanwhile, the inside of the arcuate depressed portion 34 described later serves as a center boss portion (portion of the boss portion 30 located in the vicinity of the substantially center portion 22c) (see FIG. 5 or the like).

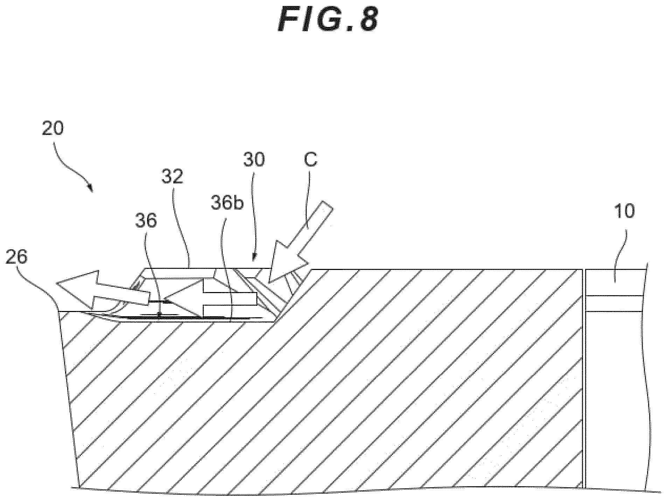

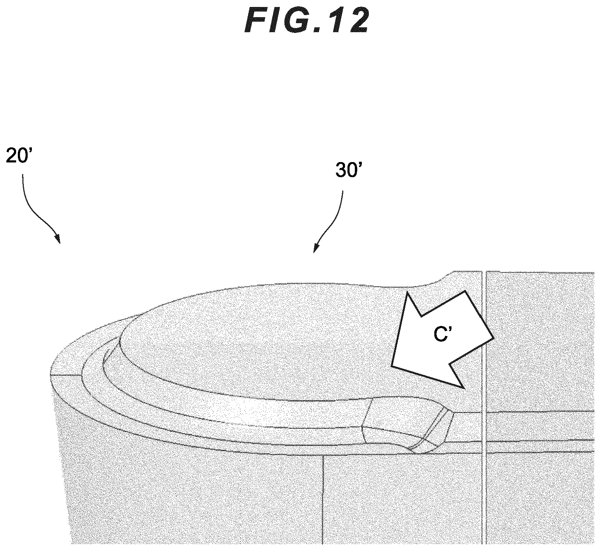

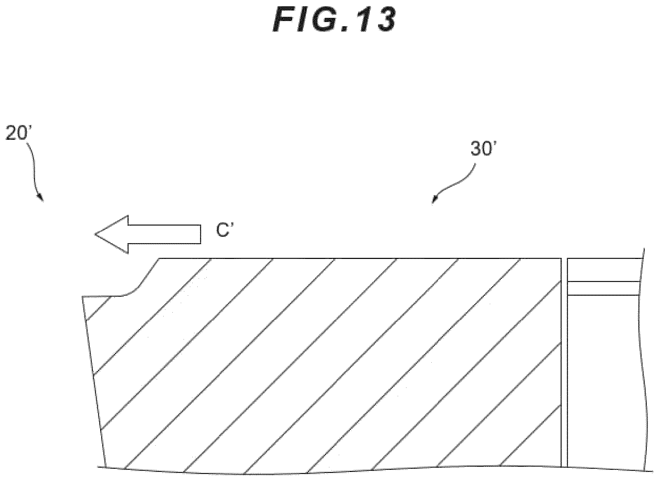

The plurality of recessed portions 36 are formed in the boss portion 30 so as to extend toward the cutting edge 26 and improve performance of supplying a coolant C to the cutting edge 26 (see FIG. 5 or the like). Compared to a flow of a coolant C' in a cutting edge member 20' in which no recessed portion is formed in a boss portion 30' (see FIG. 12 or FIG. 13), an amount of the coolant C to be supplied to the cutting edge 26 can be increased by causing the coolant C to pass through the grooves 38 formed of these plurality of recessed portions 36 (see FIG. 7 or FIG. 8). These recessed portions 36 may be formed appropriately to be able to efficiently supply the coolant C to the cutting edge 26. In the cutting edge member 20 in the present embodiment, the plurality of recessed portions 36 are formed radially from a center boss portion 30c. These plurality of recessed portions 36 are formed of the grooves each having a linear shape and a constant width in top view (see FIG. 3 or FIG. 6). Furthermore, in the cutting edge member 20 in the present embodiment, a height of a bottom surface 36b of each of the recessed portions 36 is lower than a height of the cutting edge 26 in front view or side view (see FIG. 8 or FIG. 9). In such a case, during generation of chips, the coolant enters a space between the chips and the rake surface 22 to allow the coolant to be easily delivered to a cutting point.

The cutting edge member 20 in the present embodiment has a shape in which a width W₂₈ of each of the breaker walls 28 is larger than a width W₃₈ of each of the grooves 38 formed of the recessed portions 36 (Width W₂₈ of Breaker Wall 28>Width W₃₈ of Groove 38 Formed of Recessed Portion 36) (see FIG. 5 or the like). In the case of such a shape, regions with the breaker walls 28 are, so to speak, dominant over regions with the grooves 38 with respect to the cutting edge 26, and therefore it is possible to implement stable chip control due to the effect of the breaker walls 28, while supplying the coolant C to the grooves 38 formed of the recessed portions 36. There are various manners to define the "Width W₂₈ of Breaker Wall 28" and the "Width W₃₈ of Groove 38 Formed of Recessed Portion 36" each mentioned herein, which are defined as follows by way of example in the present embodiment. In other words, first, a consideration is given to a line of intersection L1 (assumed to include a virtual line of intersection or a virtual extension line of the line of intersection, and the same applies hereinafter) between the boss surface 32 and each of the breaker walls 28. At this time, in the present embodiment, it is considered that the chamfered portion 32c described above is included in a portion of the boss surface 32, and the virtual line of intersection L1 between the boss surface (including the chamfered portion 32c) 32 and the breaker wall 28 is assumed (see FIG. 5). On intersection L1, a width of each of the breaker walls 28 and a width of each of the grooves 38 formed of the recessed portions 36 along the line of intersection L1 are defined as respective widths thereof, which are denoted by reference signs W₂₈ and W₃₈. The width W₂₈ of the breaker wall 28 and the width W₃₈ of the groove 38 formed of the recessed portion 36, which are thus defined, satisfy Width W₂₈ of Breaker Wall 28>Width W₃₈ of Groove 38 Formed of Recessed Portion 36 as described above and, depending on circumstances, the width W₂₈ of the breaker wall 28 may also be double the width W₃₈ of the groove 38 formed of the recessed portion 36 or more. In finish machining assumed to be used in the present embodiment, a cutting amount and a feeding amount are small and therefore, when the width W₂₈ of the breaker wall 28 is less than double the width W₃₈ of the groove 38 formed of the recessed portion 36, it may be possible that the breaker wall 28 does not sufficiently function and the chip control cannot be performed successfully.

The depressed portion 34 is formed to be continued to the recessed portions 36. The depressed portion 34 is formed in a substantially arcuate shape around the center boss portion 30c serving as the center portion of the cutting edge 26 to allow the coolant C that has entered the depressed portion 34 to flow out into the recessed portions 36 communicating therewith.

### Structure of Edge Portion

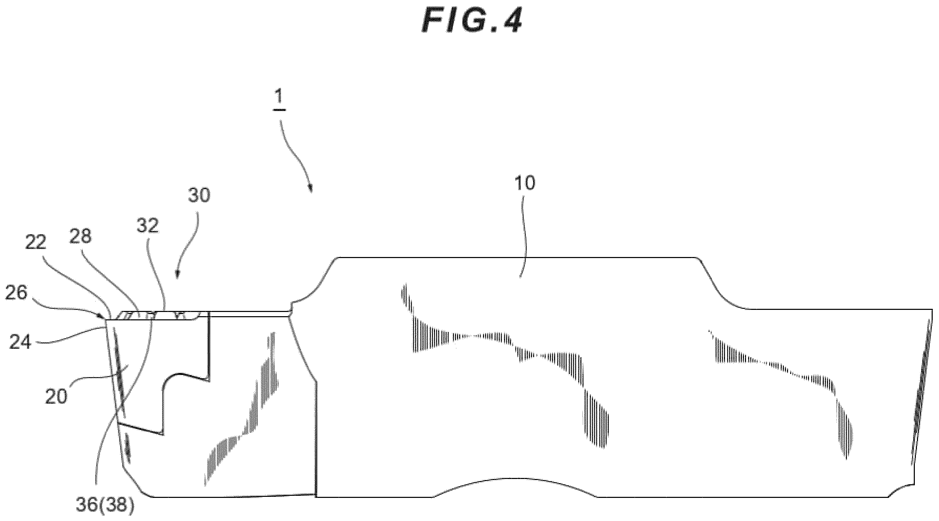

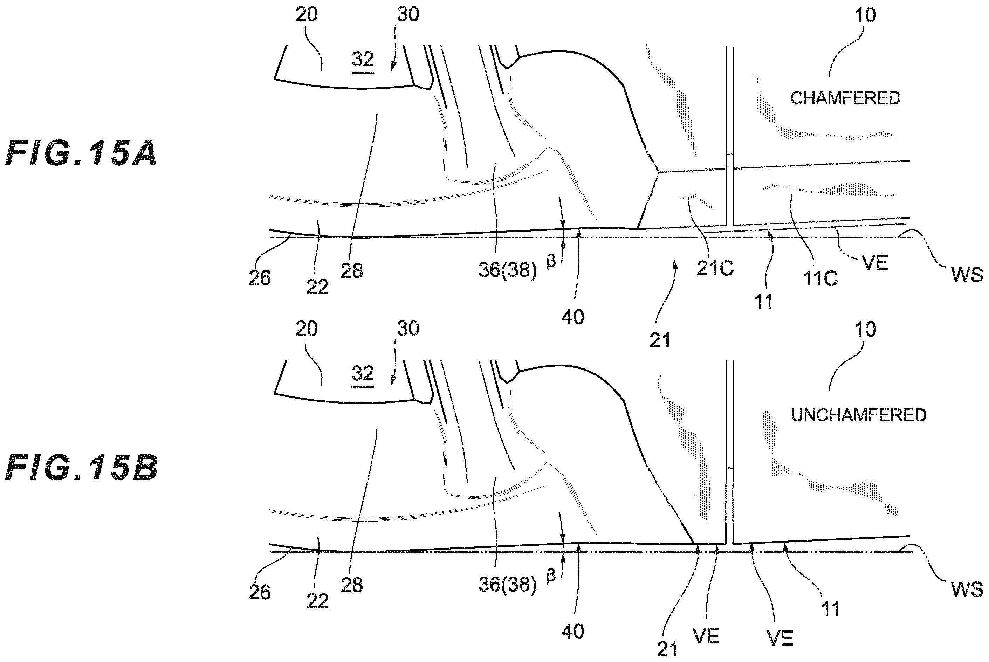

In the cutting insert 1 used in the present embodiment, behind the cutting edge 26 (i.e., on the base insert member 10 side) along the longitudinal direction (the same as an axial direction of the center axis 10X), edge portions 11 and 21 may be present at positions where distances thereof from the bottom surface are higher than a distance of the cutting edge 26 from the bottom surface (see FIG. 15B, in which the edge portion on the base insert member 10 side is denoted by a reference sign 11, while the edge portion on the cutting edge member 20 side is denoted by a reference sign 21). The edge portions 11 and 21 thus present at the positions higher than that of the cutting edge 26 have narrow clearances with a machined surface (denoted by a reference sign WS in FIGS. 15A and 15B) and, as described previously, there is a risk that the edge portions 11 and 21 may interfere with the machined surface WS during machining. In this regard, in the present embodiment, each of the edge portions 11 and 21 is formed in a partially chamfered shape to be able to avoid interference with the machined surface (see FIG. 15A, in which the chamfered portions are denoted by reference signs 11C and 21C). The presence of the chamfered portions 11C and 21C means that a virtual edge (denoted by a reference sign VE), which is a line of intersection between the boss surface 32 and the flank surface 24, is eliminated, and the edge portions 11 and 21 are in accordingly retracted shapes. With the cutting insert 1 described above, by merely forming each of the edge portions 11 and 21 located behind the cutting edge 26 with the chamfered shape, it is possible to avoid the interference with the machined surface WS without causing such problems as an insufficient bonding strength due to a reduction in joint area when the cutting edge member 20 is bonded (brazed) to the base insert member 10 and a reduced rigidity as well as occurrence of breakage and chattering. Note that a joint portion between the base insert member 10 and the cutting edge member 20 may have a stepped shape in side view (see FIG. 4 or the like), or may also have a wavy shape in top view. By thus increasing an area of the joint portion, it is possible to increase the bonding strength.

The chamfered portions 11C and 21C of the edge portions 11 and 21 may also be shaped during forming of the cutting insert 1 or the base insert member 10, or may also be subsequently shaped by being subjected to removal machining after the forming. Note that, in each of FIGS. 15A and 15B, the back taper 40 described above is illustrated in combination. The back taper 40 has a shape in which a width gradually decreases toward the edge portions 11 and 21 (see FIGS. 15A and 15B).

Note that the embodiment described above is an example of the preferred embodiment of the present invention, but is not limited thereto, and can variously be modified and implemented within the scope not departing from the gist of the present invention. For example, in the embodiment described above, the description has been given of a case where the present invention is applied to the cutting insert 1 having the cutting edge member 20 brazed to the base insert member 10, but this is only a preferred example and, needless to say, the present invention is also applicable to a cutting tool other than the cutting insert 1 described above.

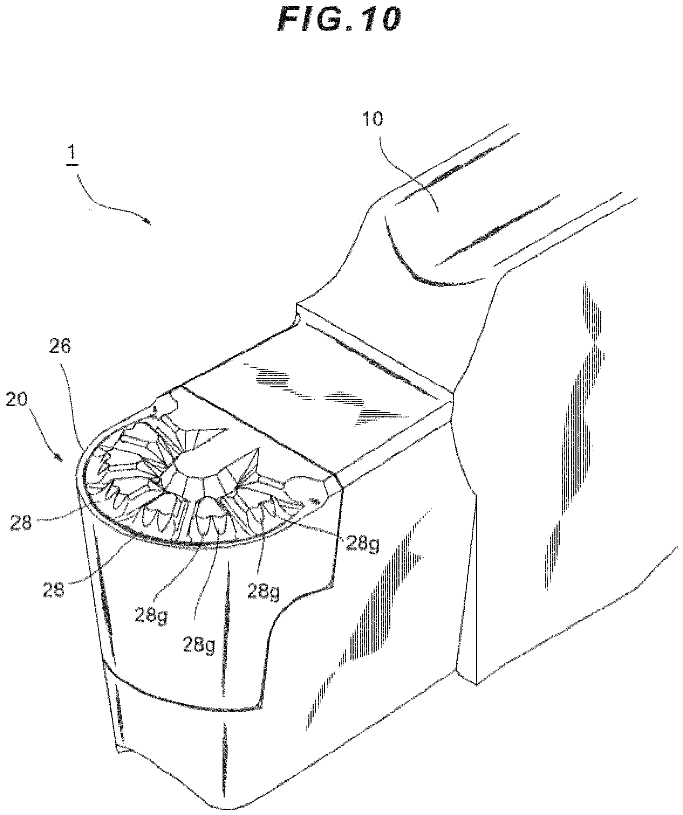

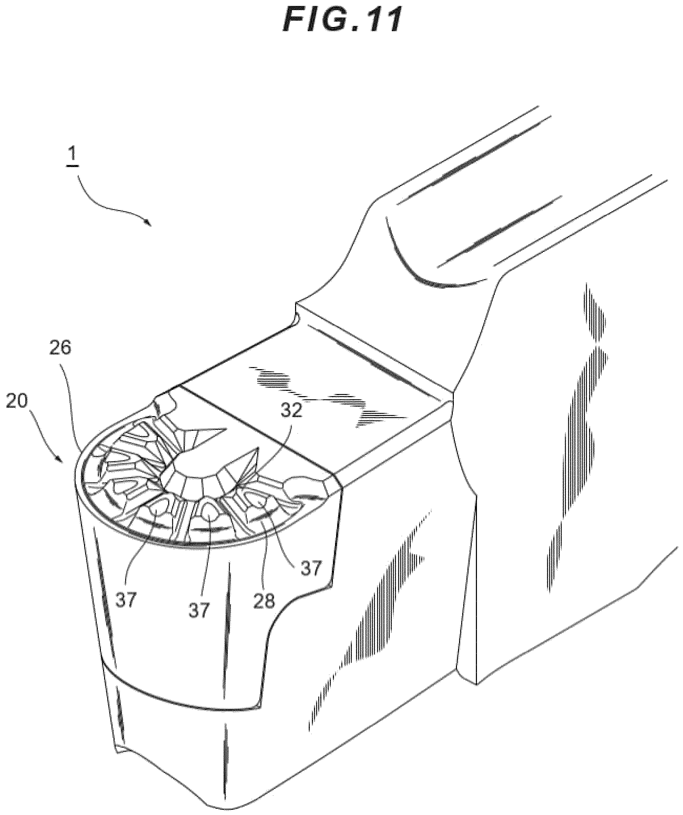

In the embodiment described above, the cutting edge member 20 is shown (see FIG. 7 or the like) in which the distance (breaker width Wb) between each of the breaker walls 28 and the cutting edge 26 is uniform, but the distance (breaker width Wb) between each of the breaker walls 28 and the cutting edge 26 may conversely be non-uniform. Specific examples of the cutting edge member 20 having the non-uniform breaker width Wb include one in which the breaker wall 28 is provided with, e.g., two protrusions 28g (see FIG. 10). By providing these protrusions 28g and setting the optimum breaker width WB according to a position of the cutting edge 26 to be used, more satisfactory chip control is possible. Alternatively, it may also be possible that notched smaller recessed portions 37 other than the recessed portions 36 are provided in the boss portion 30 (see FIG. 11). In such a case, the coolant C is supplied also from the smaller recessed portions 37, and a larger amount of the coolant C can be supplied toward the cutting edge 26.

The present invention is preferably applied to a cutting tool.

## Claims

1. A cutting tool comprising:
a base insert member extending along a longitudinal direction; and
a cutting edge member provided at a longitudinal end portion of the base insert member,
the cutting edge member including:
a rake surface;
a flank surface;
a cutting edge configured at a line of intersection between the rake surface and the flank surface and having an arcuate shape in top view when viewed from a side with the rake surface;
a breaker wall formed inwardly of the cutting edge and protruding upward from the cutting tool; and
a boss portion including a boss surface formed continuously to the breaker wall,
a center angle of the cutting edge being not less than 180°, and
an edge portion present behind the cutting edge along the longitudinal direction, the edge portion having at least a portion that is chamfered.

2. The cutting tool according to claim 1, wherein the edge portion is chamfered.

3. The cutting tool according to claim 1 or 2, wherein a region that has been subjected to the chamfering includes a virtual edge corresponding to a line of intersection between the boss surface and the flank surface.

4. The cutting tool according to any one of claims 1 to 3, wherein each of the base insert member and the cutting edge member has the edge portion.

5. The cutting tool according to any one of claims 1 to 4, wherein the center angle of the cutting edge is not more than 185°.

6. The cutting tool according to any one of claims 1 to 5, wherein, between the cutting edge and the edge portion, a back taper having a width gradually decreasing toward the edge portion is provided.

7. The cutting tool according to any one of claims 1 to 6, wherein a joint portion between the base insert member and the cutting edge member has a stepped shape in side view.

8. The cutting tool according to any one of claims 1 to 7, wherein a joint portion between the base insert member and the cutting edge member has a wavy shape in top view.

9. The cutting tool according to any one of claims 1 to 8, which is a cutting insert including the base insert member formed of a cemented carbide and the cutting edge member formed of a sintered body containing cBN.
